Europäisches Patentamt

European Patent Office

Office européen des brevets

(19)

(11) Publication number: **0 047 577**
A2

(12)

# EUROPEAN PATENT APPLICATION

(21) Application number: **81303238.0**

(22) Date of filing: **14.07.81**

(51) Int. Cl.³: **B 65 G 17/12**

(30) Priority: **14.07.80 US 168554**

(43) Date of publication of application: **17.03.82**
Bulletin 82/11

(84) Designated Contracting States: **BE DE GB IT NL**

(71) Applicant: CARGILL, INCORPORATED, Box 9300, Minneapolis Minnesota 55440 (US)

(72) Inventor: Weis, Bruce Thomas, 7147 161st Lane, N.W. Anoka Minnesota 55303 (US)
Inventor: Wade, Franklin John, 12137 Y Plaza, Omaha Nebraska 68137 (US)

(74) Representative: Mayes, Stuart David et al, BOULT, WADE & TENNANT 27 Furnival Street, London, EC4A 1PQ (GB)

(54) Grain lifting and discharge apparatus.

(57) Apparatus is disclosed for the lifting and discharging of grain employing plug flow to minimize grain damage, dusting and wear and tear. A belt (25) carrying lightweight buckets (27) is operated at relatively low speed and is trained around a head (23) and a tail (21) pulley. The lip (31) of the buckets projects outwardly from the belt surface a predetermined distance. The speed of the belt (25), the effective diameter of the head pulley (23) and the bucket projection from the belt are correlated to provide the desired discharge flow from the buckets (27).

-1-

GRAIN LIFTING AND DISCHARGE APPARATUS

The invention relates to apparatus for lifting and discharging grain.

For many years, it has been necessary to lift grain and discharge it into various kinds of receptacles, such as storage bins, silos, hoppers and the like. This has been done by belts to which have been attached metal buckets for carrying the grain. The belts have run at high speed over a pair of vertically spaced pulleys. The buckets on the belt dip into a reservoir of grain, which is usually continuously replenished, and travel generally vertically upwardly. At the top of the run of the belt, the belt travels over the top or head pulley and returns downwardly thereby throwing the grain from the buckets into a collection zone or chute from which the grain is discharged through a spout into a desired receptacle.

Of major importance in the design of grain lifting and discharge apparatus is the ability to maintain a high volume throughput of material. Often, the apparatus is required to maintain a flow rate of as much as 60,000 bushels per hour. In order to achieve such efficient operation, the buckets, which have generally been of metal fabrication, are made to travel at high speed. However, the high speed causes excessive dusting, grain damage and substantial wear and tear of the apparatus. Heretofore, a high volume throughput could not be obtained by the use of larger volume buckets travelling at a lower speed. This is because commercially available belts are not presently capable of withstanding the stresses created by the increased weight of larger metal buckets. Lower bucket speed is desirable since it reduces wear and tear on the apparatus and permits plug flow, thereby reducing damage to the grain.

Accordingly, it is a main object of this

-2-

invention to provide improved apparatus which can handle substantial volumes of grain with less dusting, reduced grain damage, and minimum wear and tear to the apparatus.

A further object of the invention is to provide improved apparatus for lifting grain or the like, which can run at lower speeds and provide plug flow but which can still maintain high volume throughput.

Another object of the invention is to provide a new design for apparatus for lifting large amounts of grain having a different configuration from that heretofore provided.

These and other objects of the invention will be achieved by reference to the following description of the invention.

The invention provides apparatus adapted for the lifting and discharging of grain comprising: a head pulley having a predetermined effective diameter of D' inches, a tail pulley, a belt trained around said pulleys, a plurality of buckets transversely mounted on said belt, said buckets having a lip projecting a predetermined distance of P inches from the surface of said belt, and means for moving said belt at a predetermined speed, characterised in that said predetermined speed has a value between about .95 x

$$.95 \times \frac{69.5D}{\sqrt{D' + 2P}} \text{ feet per second and about } 1.05 \times \frac{69.5D'}{\sqrt{D' + 2P}}$$

feet per second so that plug flow of grain (35) is obtained upon discharge from said buckets (27).

In one embodiment, the invention comprises a generally vertically travelling belt which may extend upwardly more than 200 feet. The belt travels between a lower or tail pulley located in the region of a grain reservoir or boot and an upper or head pulley located adjacent a discharge chute. The belt and pulley are generally enclosed within a housing. Attached to the belt at spaced intervals are lightweight urethane buckets. The buckets project outwardly a predetermined distance from the belt to the bucket lip. The diameter of the head pulley, the speed of the belt, and the outward projection of the bucket lip from the belt are all correlated to achieve plug flow of grain from the buckets thereby minimizing grain damage and dusting. A high volume throughput can be maintained at much lower belt speeds with resulting minimization of wear and tear on the apparatus. The use of urethane buckets in the apparatus combined strength and durability with light weight so that the various features of the invention can be enjoyed. More particularly, the urethane buckets permit each bucket to carry large volumes of grain so that a high volume throughput can be achieved in combination with plug flow of the grain.

It will be understood that various equivalents may be provided once the parameters of this invention are perceived and these variations can be extrapolated from the data provided in this Specification.

Plug flow and efficient operation has been achieved in commercial operations at a belt speed of about 450 feet per minute which is about one-half the belt speed heretofore used in lifting grain. The belt travels over a head pulley having a diameter of about 60 inches. The buckets are attached to the belt on 14 inch centers by means of bolts. The buckets are fabricated from urethane, weigh about 30 pounds each, and project outwardly from the belt to the bucket lip about 16 inches. Each bucket is about 29 inches wide and 13 inches deep, and has capacity of about 1.5 bushels (3100 cubic inches).

In the event that a different head pulley diameter is used or that the bucket extension from the belt is changed, the belt speed should be adjusted to achieve the desired grain flow. The point is that the belt speed, the projection of the bucket from the belt to the bucket lip and the pulley diameter are functionally related to provide plug flow. The use of urethane buckets permits the handling of increased volumes per bucket and thereby makes possible the advantages of the invention.

Belts are commercially available in 60 inch widths so that two buckets can be attached to the belt in two rows. The buckets in the respective rows are staggered to achieve balance in operating. However, this additional row of buckets is not a special feature of this invention.

A preferred embodiment of the invention will now be described, by way of example, with reference to the drawings, in which:-

FIGURE 1 is a side elevational view of the grain lifting and discharge apparatus of the invention with portions broken away to show parts contained within the housing.

FIGURE 2 is a view taken along line A-A in Figure 1 showing the buckets on the belt.

FIGURE 3 is a side view of the internal portion of the top section of the grain lifting and discharge apparatus of the invention showing the buckets travelling over the head pulley and the grain being discharged in the plug flow condition.

FIGURE 4 is also a side view of an internal portion of the top section of a grain lifting and discharge apparatus, similar to Figure 3, but having an old, small bucket design and showing the grain being discharged in a rapid non-plug flow condition.

FIGURE 5 is a perspective view of a large urethane bucket.

FIGURE 6 is a graph of belt speed as a function of effective head pulley diameter for the generation of plug flow from buckets having a 16 inch projection.

Now referring to the drawings, there is illustrated a commercial embodiment of the invention. The apparatus c comprises a casing 11, made generally of 12-guage steel, which is generally rectangular in cross section. At the bottom of the casing 11 is provided a boot 13 which serves as a grain reservoir. Grain is continuously fed into the boot by a feed spout 15. At the top of the casing 11 there is provided a discharge chute 17 which terminates in a discharge spout 19. The casing 11 is about 220 feet in height and is provided throughout its vertical extent with access panels and doors (not shown) for repair and maintenance purposes.

Journaled at the bottom of the casing 11 is a bottom or tail pulley 21 and at the top of the casing 11 there is journaled a top or head pulley 23, which is located above the discharge chute 17. A belt 25, which is commercially available, is trained around the pulleys 21 and 23. The belt 25 is driven in a conventional manner by a 500 horsepower motor (not shown). In the illustrated embodiment, the belt 25 is 60 inches wide and is driven at a speed of about 450 feet per minute.

The diameter of the tail pulley 21 is not particularly critical to the operation of the apparatus of the invention but in the apparatus shown in the drawings, is 42 inches in diameter. The diameter of the head pulley shown in the drawings is 60 inches in diameter. As before indicated, the diameter of the head pulley 23 is important in relation to belt speed and the projection of the bucket lip from the belt surface.

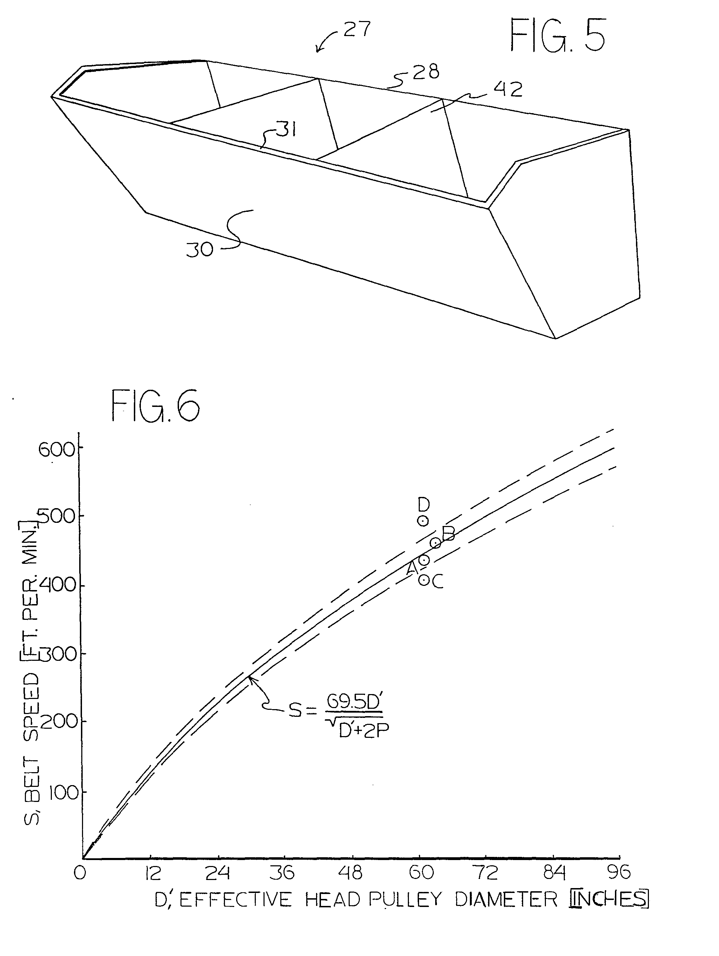

Attached to the belt 25 are a series of transversely mounted buckets 27 for picking up grain in the boot 13, transporting the grain to the top of the casing 11, and discharging the grain to the discharge chute 17. In Figure 5, the configuration of the buckets 27 is shown. The buckets 27 are relatively light in weight, being fabricated from urethane, and weigh about 30 pounds each. The rear wall 28 of each bucket 27 is bolted to the belt 25. The buckets 27 are located on 14 inch centers. The buckets 27 are 29 inches wide and the front wall 30 extends outwardly and is 16 inches from the belt surface at its lip 31 which is an important dimension for purposes of this invention. Gussets 42 provide the buckets 27 with strength and rigidity. The buckets are 13 inches in depth.

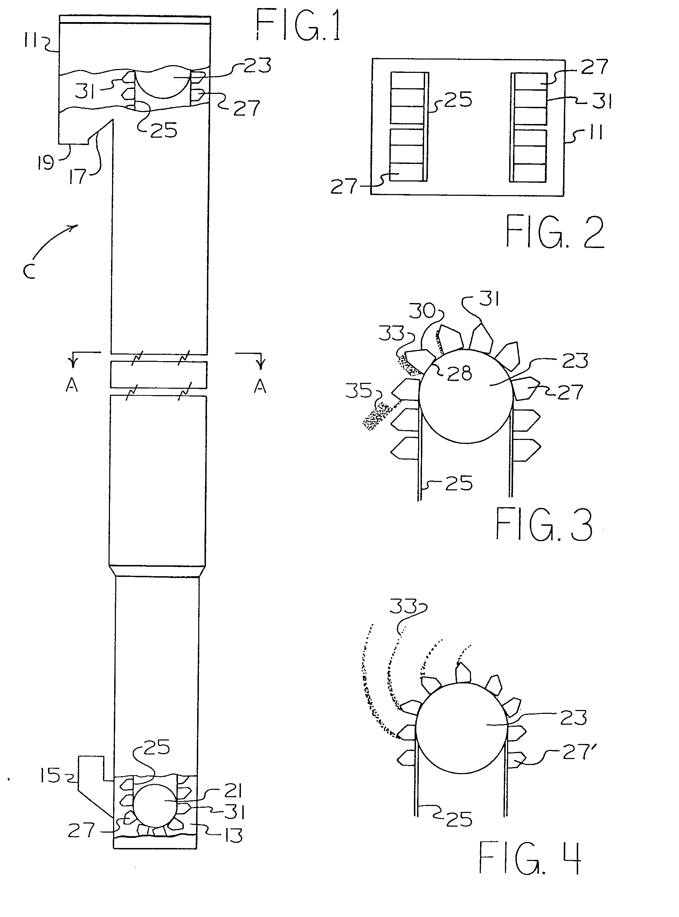

The buckets 27 are dimensioned to provide a grain capacity of 1.5 bushels (3100 cubic inches) and front walls 30 of the buckets 27 are angled with respect to the rear wall 28 to facilitate loading and emptying. Because the bucket 27 has a depth of 13 inches, there is a space of about 1 inch between the bottom of one bucket 27 and the top of the following bucket. In the apparatus, as shown in Fig. 2, there are two rows of buckets 27 on the belt 25, thereby doubling the capacity of the apparatus. The buckets 27 in each row are staggered to provide balance to the belt.

It is also important that the buckets 27 be made of a lightweight material that has the ability to withstand wear during operation. One such material is urethane. Urethane buckets provide a unique combination of features for this invention by allowing high volume throughput at a belt speed slow enough to provide plug flow.

·In operation, the boot 13 is continuously fed with grain to provide a reservoir of grain. The buckets 27 attached to the belt 25, enter the grain reservoir and scoop up the grain as they move upwardly from the tail pulley 21. The buckets 27 travel upwardly and over the head pulley 23 causing the grain to be thrown from the buckets 27 into the chute 17 and out of the spout 19. As the grain is discharged from the buckets 27, it leaves under plug flow conditions (Fig. 3).

The plug flow condition of the grain flow, as it is discharged from the buckets 27, is obtained by correlating the belt speed, head pulley diameter and the projection of the bucket lip 31 from the belt 25 surface. Buckets 27 loaded with grain 33 are shown travelling upward toward the head pulley 23 on the right-hand portion of the belt 25 in Fig. 3. By correlating the above-mentioned parameters, as the bucket travels over the head pulley 23, the radial acceleration on a kernel of grain located at the lip 31 of the bucket 27 is balanced with the acceleration due to gravity. Ideally then, the kernel of grain should remain motionless with respect to the bucket 27 until the orientation of the loaded bucket 27 has changed at least 90°. Some minor movement may, however, actually occur prior to this time primarily due to the angled relationship between the front 30 and rear 28 walls of the buckets 27. In any event, as the bucket 27 continues its path over the head pulley 23, the angled front wall 30 produces an outward resultant force from the centrifugal force acting on the grain. The grain is then gently discharged, en masse as a "plug" 35 into the discharge chute 17 (not shown in Fig. 3).

Plug flow should be compared with grain discharge from conventional metal buckets 27' that have generally been of smaller dimensions and operated with higher belt speeds to obtain comparable grain throughput (Fig. 4). The buckets 27' travelling over the head pulley at high speed tend to "spray" the grain 33 in the area of the discharge chute 17 (not shown in Fig. 4). Thus, the grain kernels collide with one another and the casing 11 causing damage to the grain and increasing dusting.

To correlate belt speed, head pulley diameter and bucket dimensions for obtaining plug flow the following calculations are made. The radial acceleration (A) on a kernel of grain is given by the expression:

$$A = \frac{V^2}{R}$$

where V = the tangential velocity of a kernel of grain in feet per second as the bucket passes over the head pulley; and
where R = the radial distance of a kernel of grain from the head pulley center in feet.

In plug flow the radial acceleration A is equal to the acceleration of gravity so

$$\frac{V^2}{R} = g = 32.17 \text{ ft./sec.}^2$$

or

$$V = \sqrt{32.17R}$$

A kernel of grain located at the lip 31 of the bucket 27 (the furthest point from the head pulley center) under goes the greatest radial acceleration. In order to prevent the "spraying" of grain the radial acceleration on a kernel of grain at this location is balanced with that due to gravity. R is then a function of the head pulley diameter, D (measured in inches), and the projection of the bucket 27 from the surface of the belt 25 to the bucket lip 31, designated as P (measured in inches). In grain lifting and discharge apparatus the belt 25 is often times up to one inch thick and the head pulley 23 may be provided with lagging (not shown) up to about an inch thick to help prevent belt slippage. These two factors can substantially effect the radial distance R so that the term effective head pulley diameter, D', as used herein is meant to include the effect of belt thickness as well as lagging on R. The radial distance, R, is put in terms of effective head pulley diameter, D', and bucket projection, P, as follows:

$$R = \frac{1}{12}[\ D' + P] = \frac{(D' + 2P)}{24}$$

Similarly, V is put in terms of D', P, and belt speed, S (measured in ft./min.), as follows:

$$V = \frac{S}{60}\left[\frac{D' + 2P}{D'}\right]$$

Therefore: $\frac{S}{60} \times \left[\frac{D' + 2P}{D}\right] = \sqrt{32.17\left[\frac{D' + 2P}{24}\right]}$

or $$S = \frac{69.5D'}{\sqrt{D' + 2P}}$$

Referring now to Fig. 6, it can be seen that the solid line represents belt speed, S, plotted as a function of effective head pulley diameter, D', for the generation of plug flow from buckets having a 16 inch projection, P. The two broken lines drawn on both sides of the above mentioned solid line represent a permissible plus or minus five percent deviation in belt speed for a given effective head pulley diameter. Experimentation has shown that a plus or minus five percent deviation in belt speed from that predicted by the derived formula will still produce plug flow conditions. Accordingly, experimental examples A through D have been plotted in Fig. 6 and are explained below.

In examples A and B plug flow was obtained through the proper correlation of belt speed and effective head pulley diameter for a 16 inch bucket projection. In Example A, a grain lifting and discharge apparatus was fitted with a 60 inch diameter head pulley and a belt thickness of 3/8 inch thus yeilding an effective head pulley diameter of 60.75 inches. The aparatus was operated at a belt speed of 430 feet per minute and produced plug flow. In Example B, apparatus having a 60 inch diameter head pulley, a belt thickness of 3/4 inch and one inch lagging was operated at a belt speed of 450 feet per minute. The effective head pulley diameter, D', in Example B was 63-1/2 inches. Grain discharge from the buckets in Example B was also in the plug flow condition.

In Examples C and D, apparatus having a 60 inch diameter head pulley, a belt thickness of 3/8 inch and no lagging failed to produce plug flow because of improper belt speed. In Example C, the apparatus was operated at a belt speed of 400 feet per minute. This proved to be too low and the grain spilled out before the buckets 27 reached the discharge chute 17 resulting in a condition known as "back-legging". In Example D, the apparatus was operated at a belt speed of 480 feet per minute which resulted in excessive spraying and throwing of the grain.

On the basis of Examples A through D, it was determined that a deviation in belt speed (for a given effective head pulley diameter and bucket projection) of about plus or minus five percent from that predicted by the derived formula will still produce plug flow of the grain upon discharge from the buckets.

To further illustrate the predictability of plug flow by the correlation of belt speed, bucket projection and effective head pulley diameter a grain lifting and discharge apparatus was fitted with a 42 inch diameter head pulley, a 3/8 inch thick belt, and buckets projecting 14 inches from the belt surface to the bucket lip. Plug flow of the grain was observed, through the use of high speed photography, at a belt speed of 340 feet per minute. This compares very favorably with that predicted by the derived formula, about 353 feet per minute. The belt speed at which plug flow was observed was within about 3.7 percent of that predicted.

As was previously mentioned, the use of urethane buckets permits the combination of high volume grain throughput and plug flow in the grain lifting and discharge apparatus. Apparatus having a 60 inch diameter head pulley and two rows of the 1.5 bushel capacity urethane buckets shown in Fig. 5 spaced on 14 inch centers, operated at a belt speed of about 425 to 465 feet per minute has a throughput capacity of about 57,000 to 61,800 bushels per hour. Similarly, apparatus having bucket dimensions and spacing as described above and a 72 inch diameter head pulley, operated at a belt speed of about 475 to 525 feet per minute has a throughput capacity of about 63,000 to about 69,600 bushels per hours. These high volume throughputs are obtained in combination with the reduced dusting and grain damage attributable to plug flow.

It should be understood that although certain preferred embodiments of the present invention have been illustrated and described, various modifications, alternatives and equivalents thereof will become apparent to those skilled in the art and, accordingly, the scope of the present invention should be defined only by the appended claims and equivalents thereof.

Various features of the invention are set forth in the following claims.

CLAIMS:

1. Apparatus adapted for the lifting and discharging of grain comprising: a head pulley having a predetermined effective diameter of D' inches, a tail pulley, a belt trained around said pulleys, a plurality of buckets transversely mounted on said belt, said buckets having a lip projecting a predetermined distance of P inches from the surface of said belt and, means for moving said belt at a predetermined speed, characterized in that said predetermined speed has a value between about $.95 \times \dfrac{69.5D'}{\sqrt{D' + 2P}}$ feet per second and about $1.05 \times \dfrac{69.5D'}{\sqrt{D' + 2P}}$ feet per second so that plug flow of grain (35) is obtained upon discharge from said buckets (27).

2. Apparatus in accordance with Claim 1 characterized in that said buckets (27) are fabricated from urethane.

3. Apparatus in accordance with Claim 1 or Claim 2 characterized in that said head pulley (23) has a diameter between about 10 inches and about 72 inches and said predetermined effective diameter (D1) is between about 10 inches and about 76 inches.

4. Apparatus in accordance with any of Claims 1 to 3 characterized in that said predetermined distance P is between about 2 inches and about 48 inches.

5. Apparatus in accordance with any of Claims 1 to 4 characterised in that said buckets (27) have a grain capacity between about 0.005 bushels and about 120 bushels.

6. Apparatus in accordance with any of Claims 1 to 5 characterized in that said apparatus has a throughput capacity between about 120 bushels per hour and about 120,000 bushels per hour.

0047577

FIG.1

FIG. 2

FIG.3

FIG. 4

FIG. 5

FIG.6

$$S = \frac{69.5D'}{\sqrt{D'+2P}}$$

S, BELT SPEED [FT. PER. MIN.]

D', EFFECTIVE HEAD PULLEY DIAMETER [INCHES]